(19) Europäisches Patentamt
European Patent Office
Office européen des brevets

(11) **EP 2 871 976 B1**

(12) **FASCICULE DE BREVET EUROPEEN**

(45) Date de publication et mention de la délivrance du brevet:
**25.04.2018 Bulletin 2018/17**

(21) Numéro de dépôt: **13737264.5**

(22) Date de dépôt: **16.07.2013**

(51) Int Cl.:
*A23L 7/117* *(2016.01)*    *A23L 7/161* *(2016.01)*
*A23L 19/00* *(2016.01)*    *A23L 33/00* *(2016.01)*

(86) Numéro de dépôt international:
**PCT/EP2013/065039**

(87) Numéro de publication internationale:
**WO 2014/012950 (23.01.2014 Gazette 2014/04)**

(54) **PRODUITS EXTRUDES DESHYDRATES POUR L'ALIMENTATION INFANTILE**

EXTRUDIERTE UND DEHYDRIERTE PRODUKTE FÜR KINDERNAHRUNG

EXTRUDED AND DEHYDRATED PRODUCTS FOR BABY FOOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2012 FR 1256855**

(43) Date de publication de la demande:
**20.05.2015 Bulletin 2015/21**

(73) Titulaire: **Diana Naturals**
**35560 Antrain (FR)**

(72) Inventeurs:
• **NEAUD, Fabien**
**35160 Talensac (FR)**
• **FALQUERHO, Hugues**
**35830 Betton (FR)**
• **RAPHEL, Patrick**
**13510 Eguilles (FR)**

(74) Mandataire: **Regimbeau**
**20, rue de Chazelles**
**75847 Paris Cedex 17 (FR)**

(56) Documents cités:
**EP-A1- 0 717 935    WO-A1-89/04121**
**DE-A1- 3 737 442    GB-A- 2 428 958**

• **Anonyme: "Actualites Sommaire: QUAND BEBE MANGE DES CEREALES...", AFREM CLEXTRAL , 22 septembre 2005 (2005-09-22), page 7PP, XP002695158, Extrait de l'Internet: URL:http://www.afreminternational.com/actualites.php#38 [extrait le 2013-04-09]**

EP 2 871 976 B1

**Description**

Le but de la présente invention est d'obtenir des produits alimentaires secs croustillants contenant à la fois des céréales et des fruits et/ou des légumes, et qui, réhydratés, peuvent être facilement mâchés par des personnes ayant des difficultés à mastiquer, notamment les bébés. Ces produits alimentaires secs sont ci-après dénommés "produits déshydratés (ou secs) de l'invention". Ils peuvent être mangés directement ou, peuvent être mis en contact avec un liquide (froid ou chaud) pour obtenir les "produits réhydratés de l'invention", qui seront finalement mangés. Les produits de l'invention, notamment les produits déshydratés, ont une texture particulière qui leur permet d'être facilement mâchés, et ont des propriétés organoleptiques très attrayantes (en termes de goût et de couleur).

Pour être facilement mâché, un produit hydraté doit avoir une élasticité comprise entre 30% et 50%, ce qui correspond à une valeur optimale pour que sa texture soit souple, et résiste à au moins trois mastications d'un bébé âgé de 12 à 36 mois. Idéalement, ledit produit réhydraté doit pouvoir conserver cette élasticité au moins 3 minutes après hydratation. Par ailleurs, le produit hydraté doit idéalement pouvoir rester intègre pendant au moins 20 minutes dans un liquide (froid ou chaud).

Il a été observé que, pour être facilement humidifié et acquérir, une fois réhydraté, une texture adaptée à la mastication des bébés, le produit sec de l'invention doit avoir des caractéristiques particulières (cf. WO2012/117106). Il doit notamment avoir une activité de l'eau« Aw » compris entre 0.15 et 0.35, et doit contenir moins de 6% d'eau. Sa densité doit être comprise entre 100 et 250g/L, son indice d'élasticité à sec doit être compris entre 10 et 30%. Par ailleurs, il est préférable que sa capacité d'absorption de l'humidité soit élevée, de sorte qu'il puisse s'hydrater instantanément après sa mise en contact avec un liquide (froid ou chaud).

Le problème technique à l'origine de la présente demande était donc d'obtenir un produit alimentaire sec contenant à la fois des céréales et des fruits et/ou des légumes, ayant les caractéristiques mentionnées ci-dessus (en termes de densité, de teneur en eau, d'activité de l'eau, de capacité d'hydratation et d'indice d'élasticité) et qui, une fois réhydraté, a un indice d'élasticité comprise entre 30% et 50%, et qui reste intègre pendant au moins 20 minutes après sa mise en contact avec un liquide (froid ou chaud).

Les présents inventeurs ont découvert que des produits alimentaires contenant entre 30 et 90% de farine céréalière et entre 10 et 70% de fruits et/ou légumes déshydratés par séchage sur rouleau ou par séchage par atomisation, entre autres, remplissent, après avoir subi une extrusion - cuisson - expansion, toutes les exigences mentionnées ci-dessus. Ces produits sont donc parfaitement adaptés pour être utilisés dans les aliments pour bébé.

Il a été constaté que les produits réhydratés de l'invention ont une texture croustillante à coeur et peuvent donc être mastiqués par des bébés ayant quelques dents, typiquement des bébés à partir de 12 mois. Ces produits sont d'excellents outils pour apprendre la mastication à ces bébés. Par ailleurs, comme ils contiennent à la fois de la farine céréalière et des fruits / légumes, ils constituent un complément idéal au lait infantile, procurant à la fois satiété et fibres / vitamines aux bébés qui les consomment. Enfin, en plus de ces caractéristiques d'élasticité essentielles, ces produits ne s'agglomèrent pas, ont une couleur lumineuse naturelle, et ont d'excellentes propriétés organoleptiques.

La demande de brevet GB 2 428 958 (Univ Manchester Metropolitan), publiée en 2007, décrit un procédé pour produire un aliment de snacking mettant en oeuvre des fruits et légumes déshydratés associés avec de la farine et du sucre pour faire des snacks extrudés. Ce procédé utilise des co-produits de citrus, d'ananas ou encore de brocoli plutôt que les parties nobles des fruits et légumes. Par ailleurs, les fruits et légumes déshydratés utilisés dans ce procédé sont obtenus par déshydratation osmotique, par air chaud, ou par lyophilisation qui sont connus pour ne pas garantir l'absence d'entérobactéries dans le produit final.

Les présents Inventeurs préconisent au contraire d'utiliser des parties nobles de fruits et des légumes qui sont déshydratés par séchage sur rouleau et/ ou par atomisation, ce qui permet d'avoir une qualité organoleptique, nutritionnelle et microbiologique adaptée au besoin des enfants en bas âge. Par ailleurs, le produit de l'invention peut se conserver jusqu'à environ 12 mois, ce qui est bien plus long que les produits obtenus par les procédés de l'art antérieur (par exemple, la date limite de consommation des snacks de GB 2 428 958 est de 3 mois seulement).

En fait, les snacks produits par le procédé de GB 2 428 958 ne sont pas du tout adaptés à la consommation de nourrissons, de par leur forme (risque d'étouffement), leur composition (ils contiennent du sucre et des matières premières non nobles), et leur insuffisante innocuité en termes microbiologiques.

**Légende des figures**

La figure 1 décrit un schéma du principe d'extrusion utilisé pour obtenir les produits secs de l'invention.

La figure 2 représente le schéma de la mesure de la texture par double compression en fonction du temps.

La figure 3 montre l'évolution du taux d'hydratation des produits humidifiés dans du lait à 45°C en fonction du temps.

La figure 4 représente l'évolution de la dureté des produits de l'invention en fonction du temps d'hydratation dans du lait à 45°C.

La figure 5 représente la masticabilité moyenne de plusieurs produits de l'invention en fonction du temps d'hydratation dans du lait à 45°C.

La figure 6 représente la masticabilité pour un produit de l'invention nommé « B » en fonction du temps d'hydratation dans du lait à 45°C.

La figure 7 représente la masticabilité pour un produit de l'invention nommé « C » en fonction du temps d'hydratation dans du lait à 45°C.

**Description détaillée de l'invention**

Dans un premier aspect, la présente invention vise un produit alimentaire sec extrudé présentant une texture croustillante, contenant :

- entre 10 à 70 % en poids d'un produit végétal déshydraté et

- entre 30 à 90 % en poids d'au moins un ingrédient glucidique,

la somme des poids dudit produit végétal et dudit ingrédient glucidique représentant plus de 90% en poids du poids total dudit produit alimentaire sec, caractérisé en ce qu'il présente un indice d'élasticité compris entre 3 à 50%.

Au sens de la présente invention, on entend par « produit végétal » tout aliment d'origine végétale consommable par un être humain ou animal, et, de préférence, par un bébé. De préférence, ce produit végétal est un fruit, un légume, un mélange de fruits, un mélange de légumes, ou un mélange de fruit(s) et de légume(s).

Dans un mode de réalisation préféré, ledit fruit est choisi dans le groupe constitué de la fraise, la framboise, la pomme, la banane, la pêche, la mangue, la myrtille, la poire, l'abricot, la pêche, la mûre, la cerise, le citron, le pamplemousse, l'ananas, la papaye, la prune, le pruneau, le raisin, et la canneberge.

Dans un autre mode de réalisation préféré, ledit légume est choisi dans le groupe constitué de la carotte, l'épinard, le potiron, la courgette, la tomate, le petit pois, les haricots verts, le brocoli, le chou, le maïs, la patate douce, l'oignon, et le poireau.

Le produit sec de l'invention contient également un ingrédient glucidique. Dans un mode de réalisation préféré, un ingrédient glucidique est un ingrédient contenant majoritairement des glucides complexes. Dans un mode de réalisation encore plus préféré, cet ingrédient est choisi dans le groupe constitué de : la farine céréalière (notamment la farine de blé, la farine de riz et/ou la farine de maïs), l'amidon de maïs, l'amidon de blé, l'amidon de riz ou l'amidon de pomme de terre ainsi que toutes les maltodextrines dérivées des amidons sus-nommés.

Ce produit alimentaire sec extrudé a de préférence les caractéristiques suivantes :

a) Sa teneur en eau est comprise entre 1 et 6%. La teneur en eau d'un produit est le pourcentage de la masse totale d'un produit constitué par l'eau. Elle est généralement déterminée par pesée d'un échantillon, puis dessiccation sous vide et/ou à température élevée pour faire évaporer l'eau, puis repesée de l'échantillon pour déterminer sa perte en eau, conformément à une procédure standardisée par l'Association des Chimiste analytiques officiels (AOAC). On peut également atteindre la valeur de la teneur en eau par des méthodes de titration chimique (par exemple le titrage Karl Fischer), en déterminant la perte de masse à l'étuvage (par usage aussi d'un gaz inerte), ou par lyophilisation. L'industrie agro-alimentaire fait grand usage d'une méthode dite « de Dean-Stark ». Le mémento édité chaque année par l'*American Society for Testing and Materials Standards* propose d'estimer la teneur en eau évaporable « p » dans le composite avec la formule suivante :

$$p = \frac{W - D}{D}$$

où *W* est le poids initial de l'échantillon, et D est le poids de l'échantillon desséché.

b) Son activité de l'eau Aw est comprise entre 0.15 et 0.35, de préférence comprise entre 0.2 et 0.3. Le facteur Aw du produit sec de l'invention est avantageusement compris entre 0.15 et 0.35, de préférence compris entre 0.2 et 0.3. L'"activité de l'eau" ("Aw") d'un produit est directement liée de façon non linéaire à la teneur en eau de ce produit, et est généralement considérée comme l'humidité relative à l'intérieur dudit produit. Ce paramètre "Aw" mesure la pression de vapeur de l'humidité dans un matériau hygroscopique, à une température spécifique, et représente la pression de vapeur d'eau du produit sur la pression de vapeur saturante de l'eau à la même température. Elle est donc exprimée comme suit:

$$Aw = p / p_s$$

où P= pression partielle de la vapeur d'eau dans le produit
Et où $P_s$= pression partielle de la vapeur d'eau pure saturante

Ce paramètre traduit les interactions de l'eau avec la matrice du produit. L'activité de l'eau ne représente pas la teneur en eau (ou humidité) du produit mais bien la disponibilité de cette eau. Dans les aliments, l'Aw est le plus souvent utilisée comme une expression de l'humidité disponible pour soutenir la croissance microbiologique. La plupart des bactéries ont besoin d'une Aw d'au moins 0,91, bien que quelques micro-organismes osmophiles peuvent se développer dans un produit ayant une Aw de 0,60. L'activité de l'eau est donc l'un des principaux paramètres influençant la conservation d'un aliment. Différentes techniques de mesure de l'activité de l'eau sont aujourd'hui connues. L'Aw peut être par exemple mesurée sur de petits échantillons enfermés hermétiquement dans un compartiment de mesure muni d'un élément sensible à l'humidité. Les éléments sensibles d'humidité HYGROMER et HYGROLYT de ROTRONIC répondent à ces critères.

c) Sa densité est comprise entre 100 et 250 g/L.
La densité du produit sec de l'invention est avantageusement comprise entre 100 et 250 g/L. La densité d'un produit est généralement mesurée en évaluant précisément la masse du produit et celle du même volume d'eau. On peut déterminer la densité tout simplement au moyen d'une balance et d'un récipient gradué. Couramment, un pot d'un litre permet d'avoir une mesure rapide de la densité des produits de l'invention.

d) Sa texture (à sec) est croustillante.
Le produit sec de l'invention a avantageusement une texture croustillante. Au sens de la présente invention, un produit sec a une « texture croustillante » lorsque son élasticité à sec est comprise entre 10% et 25% et sa force de rupture est inférieure à 50 N en mode compression (en utilisant le texturomètre TA+ - LLOYD).

e) Son indice d'élasticité hydraté après 1 minute de réhydratation dans un liquide à 45°C est compris entre 30 et 50%.

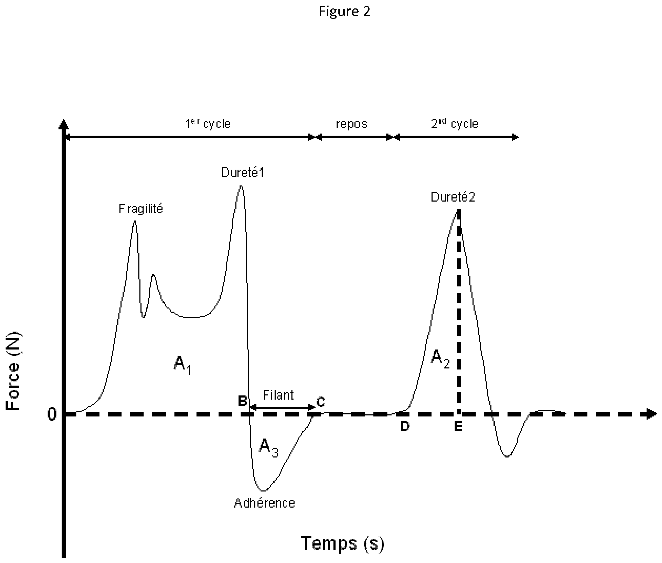

L'élasticité des produits de l'invention peut être déterminée au moyen d'un texturomètre (par exemple le texturomètre TA+ commercialisé par LLOYD). Le logiciel Nexygen associé au texturomètre TA+ permet, avec une procédure d'analyse de texture d'avoir accès à la dureté, à l'élasticité, à l'indice d'élasticité et à la masticabilité, entre autres en combinant deux cycles de compression (voir Figure 2).
La dureté représente le pic de force : c'est la force nécessaire pour atteindre la déformation donnée. Dans notre cas, 2 duretés ont été mesurées, notées D1 pour le pic de la première compression et D2 pour le pic de la deuxième compression. Cette valeur est exprimée en Newton (N).
L'élasticité est la hauteur à laquelle revient un échantillon déformé après retrait de la force d'écrasement. C'est la différence entre la hauteur h2 de l'échantillon au moment de la deuxième compression, moins la hauteur h1 du produit ayant subi la première compression. Cette valeur est exprimée en millimètre (mm).

$$e = h2-h1$$

L'indice d'élasticité (« I.e. ») est le rapport entre la dureté 2 et la dureté1. Il est exprimé en % :

$$I.e. = D2/D1,$$

exprimé en %
Le produit sec de l'invention a avantageusement un indice d'élasticité compris entre 10 et 35%. Une fois hydraté environ 1 minute dans un liquide à 45°C, l'indice d'élasticité a avantageusement une valeur comprise entre 30 et 50%.

f) Il peut se conserver pendant au moins 12 mois dans des conditions de stockage classiques (Température autour de 20°C et humidité de l'air de 60%). Il s'hydrate instantanément ou progressivement au contact d'un liquide, froid ou chaud.
Comme de nombreux produits extrudés, les produits secs de l'invention sont généralement peu hygroscopiques, et peuvent donc se conserver de nombreux mois sans absorber l'humidité ambiante et sans s'agglomérer dans un conditionnement adéquat, par exemple dans un sac polyéthylène contenu dans un carton.
g) Sa masticabilité est optimale entre 3 et 5 minutes d'hydratation dans un liquide à 45°C.

La masticabilité (M) représente l'énergie nécessaire pour mastiquer un produit mi-solide pour permettre son ingestion. Le calcul de la masticabilité est le produit de la dureté D1 par la cohésion (définie comme le rapport des aires A2/A1 de la figure 2) par l'élasticité (telle que définie ci-dessus). Elle est exprimée en kgf.mm ou en N.mm.

$$M = D1 \times A2/A \times (h2-h1)$$

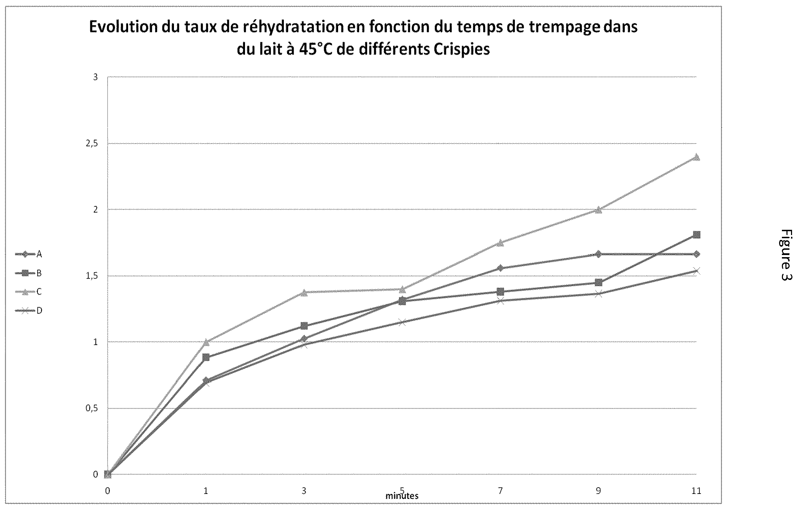

La mesure est prise au cours l'hydratation dans un liquide entre 35 et 90°C, de préférence entre 40 et 50°C, encore de préférence à 45°C. Le produit sec de l'invention est capable de s'hydrater instantanément lorsqu'il est mis en contact d'un liquide chaud ou froid (par exemple à base d'eau ou de lait). Typiquement, le produit sec de l'invention peut reprendre entre 1 et 3 fois son poids en lait/eau après 11 minutes d'hydratation avec le liquide à 45°C (voir figure 3).
De façon avantageuse, les produits secs extrudés de l'invention ont des propriétés attrayantes en termes de couleur / de forme. En particulier, parce qu'ils sont destinés à l'alimentation infantile, les produits de l'invention ont idéalement :

h) Une couleur lumineuse représentative du fruit ou du légume, et
i) Des formes attractives: oblongue, anneaux, cubique, étoiles, rectangulaires, en forme d'animaux ou hétérogènes (selon l'appareil utilisé pour l'extrusion).

Le produit de l'invention n'est de préférence pas sous forme sphérique (bille / boule) car les enfants risqueraient de s'étouffer en les ingurgitant. Ainsi, le produit sec de l'invention n'est pas extrudé au moyen d'une filière ronde.

Dans un second aspect, la présente invention décrit un procédé pour la production d'un produit alimentaire sec ayant une texture croustillante, comprenant les étapes consistant à:

a. mélanger :

- 10 à 70 % en poids de flocons ou de poudre comprenant plus de 40 % de fruit et/ou de légume, lesdits flocons ou poudre ayant une teneur en eau d'au plus 5%,
- 30 à 90 % en poids d'au moins un ingrédient glucidique ayant une teneur en eau d'au plus 15%,

la somme des poids desdits flocons ou de ladite poudre et dudit ingrédient glucidique représentant plus de 90% en poids du poids total du mélange,
b. soumettre ce mélange à une cuisson - extrusion,
c. expansion et formage du produit extrudé,
d. séchage du produit obtenu à l'étape c), dans un compartiment chauffé entre 100 et 140°C, jusqu'à une teneur en eau de 1 à 6 %.
e. refroidissement et conditionnement final.

On entend par « flocons d'un produit végétal» au sens de la présente invention des petits morceaux de fruits et/ou de légumes déshydratés (typiquement de 1 à 5 mm en formes de paillettes). Pour être utilisés dans le procédé de l'invention, ces flocons doivent contenir au moins 40 % de légume et/ou de fruit, et au maximum 5 % d'eau. Ces flocons peuvent être obtenus par exemple en utilisant un procédé de séchage sur rouleaux avec 1 ou 2 cylindres chauffants ou par séchage sous vide. De préférence, le séchage est réalisé sur rouleaux.

Au sens de la présente invention, on entend par « poudre d'un produit végétal » des petites particules solides (typiquement de 100 microns à 1mm de diamètre) de fruits ou de légumes déshydratés ayant une teneur en eau inférieure à 5%. Cette poudre peut être obtenue selon des techniques connues de l'homme du métier comme l'atomisation (méthode de déshydratation d'un liquide sous forme de poudre par pulvérisation dans un flux d'air chaud). La poudre peut aussi être le produit d'un broyage de flocons issus de séchage sur rouleaux ou de séchage sous vide.

Les flocons ou les poudres utilisés dans la première étape du procédé de production de la présente invention contiennent de préférence plus de 40%, et de manière encore plus préférée plus de 75% de légumes et/ou de fruits. Il est également possible d'utiliser des flocons ou des poudres composés à 100% de légumes et/ou de fruits (i.e., ne contenant, ni additifs, ni ingrédients support). Ces flocons ou poudres contiennent de préférence moins de 20% d'additifs ou d'ingrédients supports, de manière encore plus préférée, moins de 10 % d'additifs ou d'ingrédients supports, lesdits additifs ou ingrédients supports étant par exemple choisis parmi l'amidon, la maltodextrine, la pectine, la lécithine ou les antioxydants.

Les flocons ou les poudres utilisés dans la première étape du procédé de production de la présente invention ont une teneur en eau d'au plus 5%, de préférence d'au plus 4%, et, de manière encore plus préférée, d'au plus 3%.

A ces produits végétaux est ajouté au cours de l'étape a) un ingrédient glucidique obtenu de façon classique. Cet ingrédient glucidique est avantageusement choisi dans le groupe consistant en : la farine de blé, la farine de riz, la farine de maïs, l'amidon de blé, l'amidon de riz, l'amidon de maïs, l'amidon de pomme de terre et les maltodextrines dérivées de ces amidons. Cet ingrédient glucidique ne doit pas contenir plus de 15% d'eau. De préférence, il a une teneur en eau d'au plus 10%, de manière encore plus préférée il a une teneur en eau d'au plus 7%.

De manière préférée, le mélange de l'étape a) contient entre 20 et 60 % en poids desdits flocons ou de desdites poudres de produit végétal et entre 40 et 80 % en poids de l'ingrédient glucidique. De manière encore plus préférée, ce mélange contient entre 20 et 40 % en poids desdits flocons ou de ladite poudre de produit végétal et entre 50 et 70 % en poids de l'ingrédient glucidique. Dans tous les cas, il est important que la somme des poids desdits flocons ou poudres et de l'ingrédient glucidique représente au moins 90 %, de préférence au moins 95% en poids du poids total du mélange.

Il est important de noter que le mélange utilisé dans l'étape a) du procédé de l'invention ne contient pas plus de 9% en poids d'ingrédient(s) autre(s) que les flocons ou la poudre, et l'ingrédient glucidique. En particulier, ce mélange ne contient avantageusement que l'amidon naturellement présent dans l'ingrédient glucidique ou dans les produits végétaux. Un avantage de la présente invention est en effet qu'il n'est pas nécessaire de rajouter de l'amidon ou d'autres agents de texturation classiques de façon exogène ni de sucres simples.

Avant l'étape b) d'extrusion, ledit mélange a, de préférence, une teneur en eau inférieure à 15%, de manière préférée, une teneur en eau inférieure à 12% et, de manière encore plus préférée, une teneur en eau comprise entre 7 et 10%, idéalement entre 7% et 9%.

Dans une seconde étape, le mélange obtenu précédemment est soumis à un traitement de cuisson-extrusion.

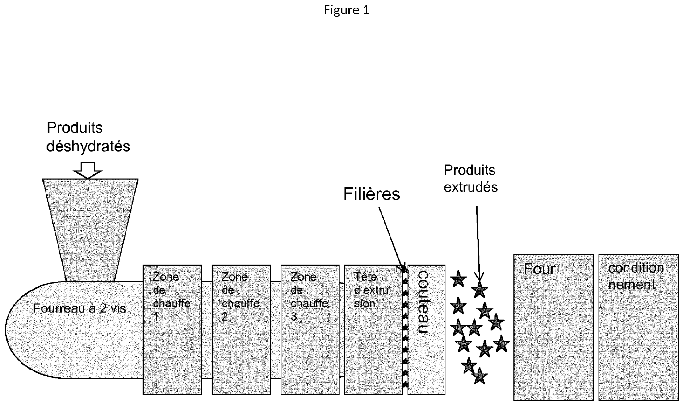

Cette technique est bien connue de l'homme de l'art. Elle consiste à forcer un produit à s'écouler à travers un orifice de petite dimension afin de le former. L'alimentation de l'extrudeuse se fait par des matières premières sous formes déshydratées via une ou plusieurs trémies. Un pré-mélange peut être réalisé en amont pour n'avoir qu'une alimentation de produit. Le mix déshydraté alimente l'extrudeuse. Un ajout d'eau est nécessaire pour hydrater le fourreau et les vis et pour transformer le mix déshydraté en pâte. Cette pâte va subir des pressions et des forces de cisaillements élevées grâce à la rotation de la ou des vis. La cuisson de la pâte peut être contrôlée grâce aux différentes zones qui permettent de chauffer ou de refroidir le fourreau (cf. figure 1). L'échauffement résultant du chauffage et des forces de cisaillement provoque une cuisson du produit puis une expansion par évaporation de l'eau en sortie de filière. La forme et la taille du produit sont déterminées par la tête d'extrusion et les filières. Le couteau en sortie d'extrudeuse définit la longueur des produits. En sortie d'extrudeuse, le produit n'est pas encore sec et il finit généralement son séchage dans un four air chaud. Le temps de séjour est variable en fonction du produit et de la taille du four.

Dans l'étape b) du procédé de production de la présente invention, l'extrusion peut se faire à une température de 80°C à 130°C pendant un temps de séjour dans le fourreau de 10 à 40 secondes, en présence de 15 à 25 % d'eau en poids par rapport au poids du mélange déshydraté entrant.

Dans un mode de réalisation préféré, le produit extrudé a, après l'étape (b), une teneur en eau d'au plus 15%.

Par suite, le produit extrudé subit une expansion de 150 à 500 %. L'expansion peut être mesurée comme étant le rapport entre les mensurations latérales du produit expansé.

Le produit expansé est ensuite formé puis convoyé et séché dans un compartiment chauffé (par exemple un four) ayant une température de 100 et 140°C, jusqu'à ce qu'il contienne une teneur en eau d'au plus 6 %.

Le produit est enfin refroidi lentement à l'air libre puis conditionné.

Il est à noter que le produit de l'invention ne subit pas nécessairement, après son extrusion - expansion, d'étape de fractionnement ou de broyage. En effet, il peut être avantageusement conditionné directement sous sa forme extrudée.

Après mesure de l'indice d'élasticité à sec des produits de l'invention à l'aide d'un texturomètre TA +, il s'avère que la gamme d'indice d'élasticité varie, en fonction du produit (de sa forme, de sa composition et de ses caractéristiques), entre 3% et 50%. Ceci nous indique que certains produits de l'invention peuvent être consommés à sec, alors que d'autres seront de préférence destinés à être consommés hydratés.

Dans un troisième aspect, la présente invention vise un produit alimentaire sec extrudé obtenu par le procédé de production de l'invention. Ce produit alimentaire présente avantageusement toutes les caractéristiques a) à i) mentionnées plus haut.

Dans un quatrième aspect, la présente demande vise également des produits alimentaires hydratés obtenus en réhydratant les produits alimentaires secs extrudés de l'invention tels que définis dans les premier et troisième aspects de l'invention.

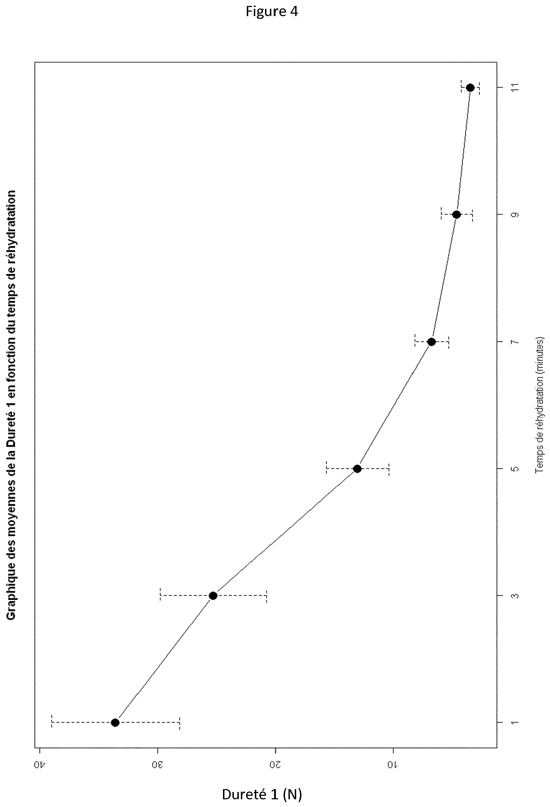

Cette réhydratation peut avoir lieu en mettant les produits alimentaires secs de l'invention au contact d'un liquide, tel que le lait, l'eau ou leurs mélanges. Ce liquide peut être froid (i.e., ayant une température comprise typiquement entre 0°C et 8°C) ou chaud (i.e., ayant une température comprise typiquement entre 40°C et 90°C, de préférence entre 40°C et 50 °C). Comme annoncé précédemment, les produits secs de l'invention s'hydratent très facilement, instantanément. Une fois les produits de l'invention réhydratés, la dureté 1 diminue progressivement comme l'indique la figure 4. Les produits de l'invention acquièrent un indice d'élasticité idéal pour être mastiqués par les bébés et jeunes enfants.

Plus précisément, les produits hydratés de l'invention présentent un indice d'élasticité de 30 à 50% 1 minute après leur mise en contact avec du lait ou de l'eau chauffés à 45°C. Cet indice d'élasticité correspond à une texture souple, facile à mâcher et qui résiste à au moins 2 mastications de bébé entre 12 et 18 mois.

Avantageusement, une fois mis en contact d'un liquide froid ou chaud, les produits de l'invention restent intègres (c'est-à-dire qu'ils gardent une forte cohésion, ils ne se délitent pas et restent sous leur forme identifiable initiale) pendant au moins 15 minutes, de préférence 20 minutes, avec une agitation légère. De façon avantageuse, les produits hydratés de l'invention restent croustillant à coeur pendant au moins 3 minutes après leur mise en contact avec un liquide chauffé à une température de 45°C.

Dans un cinquième aspect, la présente demande vise également l'utilisation des produits alimentaires secs extrudés de l'invention, ou des produits alimentaires hydratés de l'invention, dans l'alimentation infantile, notamment dans l'alimentation pour bébés.

Les produits de l'invention peuvent être consommés à sec ou hydratés.

On entend par « aliment pour bébés » tout aliment qui est conçu spécialement pour les jeunes enfants âgés de 12 mois à trois ans (36 mois). Etant donné que les nourrissons n'ont pas suffisamment de dents pour mâcher efficacement et ayant plus de difficulté à déglutir facilement, les aliments pour bébés doivent être faciles à manger, i.e., ils doivent être suffisamment mous et ne pas être trop élastiques pour être facilement mâchés. Cependant, ils doivent aussi forcer le bébé à muscler ses mâchoires et apprendre à gérer des aliments solides aux textures plus ou moins fermes.

Dans un mode de réalisation préféré, les produits de l'invention (secs ou réhydratés) sont destinés à l'alimentation des bébés âgés de 12 à 36 mois.

Dans un mode de réalisation particulier, les produits secs extrudés de l'invention sont destinés à l'alimentation des bébés âgés de 18 à 36 mois.

Dans un mode de réalisation particulier, les produits réhydratés de l'invention sont destinés à l'alimentation des bébés âgés de 12 à 18 mois.

Comme définie précédemment, la masticabilité représente l'effort consenti par la personne pour mâcher un produit alimentaire.

Après hydratation, le temps de consommation se trouve entre 1 et 11 minutes en moyenne, avec un pic de consommation entre 3 et 5 minutes. Il faut donc que la texture soit adaptée durant cette période de consommation.

Ainsi, si le produit nécessite moins de 1 N.mm entre 3 et 5 minutes après hydratation, alors ce produit est adapté aux enfants à partir de 12 mois. Dans ce cas, la présente demande vise un produit alimentaire hydraté obtenu en réhydratant le produit alimentaire sec de l'invention présentant une masticabilité inférieure à 1N.mm pendant 3 à 5 minutes après sa mise en contact avec un liquide chaud à 45°C, et destiné de préférence aux enfants à partir de 12 mois.

Si le produit nécessite plus de 1 N.mm entre 3 et 5 minutes après hydratation, alors ce produit est adapté aux enfants plus âgés, par exemple à partir de 18 mois. Dans ce cas, la présente demande vise un produit alimentaire hydraté obtenu en réhydratant le produit alimentaire sec de l'invention, présentant une masticabilité supérieure à 1N.mm pendant 3 à 5 minutes après sa mise en contact avec un liquide chaud à 45°C, et destiné de préférence aux enfants à partir de 18 mois.

Ainsi, la présente invention permet de définir deux catégories de produits en fonction de l'âge ciblé des jeunes enfants.

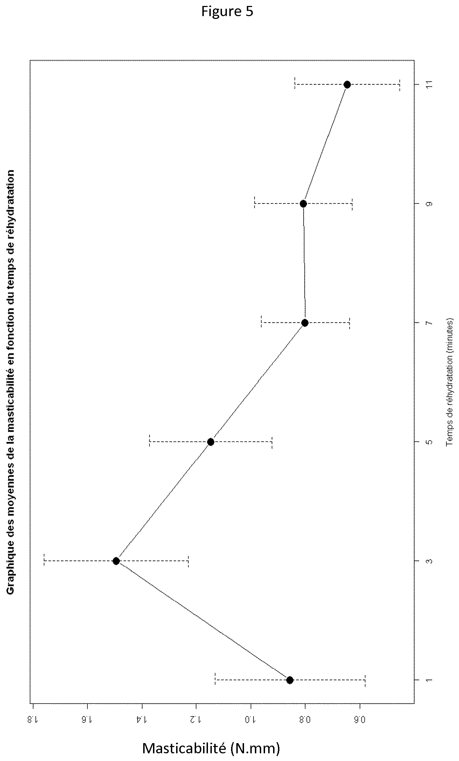

Le suivi de la masticabilité a été réalisé sur les produits de l'invention lors d'une hydratation au lait à 45°C (voir figure 5).

Les paramètres optimaux d'analyse de texture sont :

- vitesse de compression de 50 mm/min,
- seuil de compression à 0.01 N,
- compression de 75%.

La masticabilité n'est pas significativement fonction de la forme, de la densité ni du type de fruit et/ou du légume, mais d'une combinaison entre tous ces facteurs.

Dans la mesure où ils contiennent à la fois des céréales et des fruits / légumes, les produits secs de l'invention peuvent être utilisés indépendamment de tout autre aliment en les réhydratant extemporanément dans un liquide, froid ou chaud. Ces produits présentent en effet l'avantage de rassasier le bébé tout en lui apportant des vitamines, des fibres et des minéraux liés à la présence d'une grande quantité de fruits ou de légumes. Il est également possible d'incorporer les produits secs de l'invention dans des aliments secs destinés à être mangés (barres céréalières, chocolats, etc.) ou à être réhydratés avant d'être mangés, comme les mueslis, les porridges ou encore les poudres pour bouillies.

Dans un sixième aspect, la présente demande vise encore un aliment pour bébé contenant au moins un produit alimentaire sec de l'invention. Cet aliment est de préférence choisi parmi : les mueslis, les porridges, les poudres pour bouillies, les laits infantiles en poudre, les boissons déshydratées, les barres céréalières ou encore les chocolats.

Dans un septième aspect, la présente demande vise enfin un aliment pour bébé contenant au moins un produit alimentaire hydraté de l'invention. Cet aliment est de préférence choisi parmi : les bouillies, les porridges, ou les laits infantiles.

## Exemples

Les essais d'extrusion ont été réalisés en partenariat avec la société Gemef Industrie.

### Exemple 1

Un mélange de poudre en alimentation avec 30% de flocon de pomme (contenant 98% de pomme, 1% de pectine et 1% de lécithine de tournesol) et 70% de farine de blé alimentant une extrudeuse bivis Clextral. Le produit est extrudé et prend la forme d'un grain, forme oblongue de 9 mm de longueur et 4.5 mm de diamètre. Le produit est ensuite séché via un four air chaud à 130°C pendant 5 minutes. Après séchage, le produit a un Aw de 0.3 et une matière sèche de 2% et une densité de 100 g/l. Ce produit peut prendre plus de 3 fois son poids en eau/lait après 11 minutes d'hydratation et s'hydrate instantanément. Ce produit peut ensuite être intégré dans une application de base céréalière sèche pour bébé de 12 à 18 mois entre 1 et 15% et donnera une texture molle instantanément mais consistante pendant 20 minutes après hydratation.

La texture de ces produits a été mesurée à l'aide du TA + de chez LLOYD associé au logiciel Nexygen et sa procédure de compression jusqu'à la rupture. A sec, le produit a un indice d'élasticité de 15% et il faut appliquer une force à la rupture de 10 N.

### Exemple 2

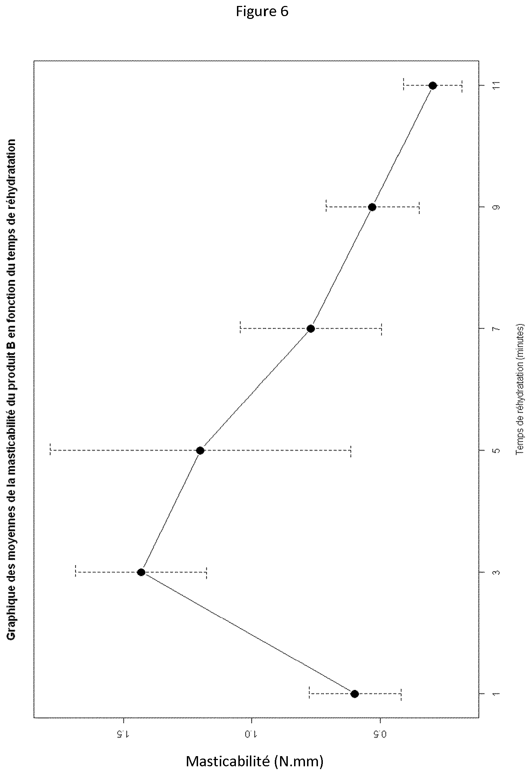

La même procédure que l'exemple 1 a été répétée avec le mélange suivant: 63% de flocon de tomate (70% tomate déshydratée, amidon de maïs, lécithine de tournesol) et 37% de farine de blé. On obtient le produit « B » de forme oblongue de 9 mm x 9 mm x 5 mm de texture croustillante. L'Aw est de 0.25 et l'humidité est de 2,3% et la densité est de 190 g/l. La texture de ces produits a été mesurée à l'aide du TA + de chez LLOYD associé au logiciel Nexygen et sa procédure d'analyse de texture. A sec, le produit procède un indice d'élasticité de 15%. Après hydratation dans du lait à 45°C, le produit présente un pic de masticabilité à 3 minutes à 1,5 N.mm qui diminue progressivement pour atteindre 0,3 N.mm après 11 minutes d'hydratation (voir figure 6). Ce produit nécessite de développer une masticabilité supérieure à 1 N.mm et peut donc être utilisé dans les aliments infantiles destinés aux enfants à partir de 18 mois.

*Exemple 3*

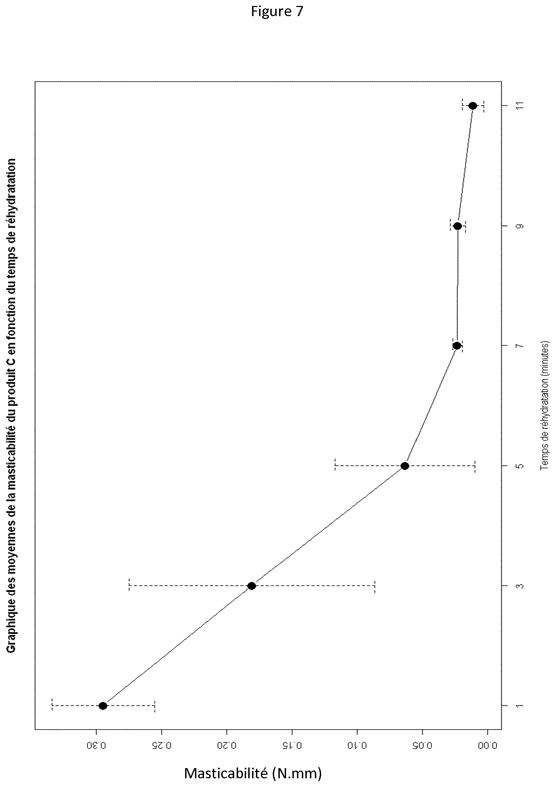

La même procédure que l'exemple 1 a été répétée en changeant la filière pour avoir une forme de pétale. Le mélange suivant a été transformé : 25% de flocon d'épinard (40% épinard déshydraté, amidon de maïs, maltodextrine et lécithine de tournesol) et 75% de farine de blé. On obtient le produit « C » de forme de pétale de 12 mm x 8 mm x 3 mm de texture croustillante. L'Aw est de 0.2 et l'humidité est de 2.5% et la densité est de 130 g/l. La texture de ces produits a été mesurée à l'aide du TA + de chez LLOYD associé au logiciel Nexygen et sa procédure d'analyse de texture. Après hydratation dans du lait à 45°C, le produit présente une masticabilité qui décroit au fil du temps d'hydratation en partant de 0,15 N.mm à 1 min pour descendre à 0,02 N.mm (voir figure 7). La masticabilité de ce produit restant inférieure à 1 N.mm, on peut donc l'utiliser dans les aliments infantiles destinés aux enfants à partir de 12 mois.

**Revendications**

1.  Produit alimentaire sec extrudé présentant une texture croustillante, contenant :

    1. entre 10 à 70 % en poids de fruits et/ou de légumes déshydratés et
    2. entre 30 à 90 % en poids d'au moins un ingrédient glucidique,

    la somme des poids desdits fruits et/ou légumes et dudit ingrédient glucidique représentant plus de 90% en poids du poids total dudit produit alimentaire sec, **caractérisé en ce qu'**il présente un indice d'élasticité compris entre 3 à 50%.

2.  Produit alimentaire sec extrudé selon la revendication 1, dans lequel les fruits et/ou légumes déshydratés sont obtenus par séchage sur rouleau et/ou par séchage par atomisation.

3.  Produit alimentaire sec extrudé selon la revendication 1 ou 2, dans lequel lesdits fruits et/ou légumes déshydratés ont une granulométrie moyenne supérieure à 250 μm, de préférence supérieure à 710 μm.

4.  Produit alimentaire hydraté obtenu en réhydratant le produit alimentaire sec des revendications 1 à 3, présentant un indice d'élasticité compris entre 30 à 50% une minute après sa mise en contact avec un liquide chaud à 45°C.

5.  Produit alimentaire hydraté obtenu en réhydratant le produit alimentaire sec des revendications 1 à 3, présentant une masticabilité supérieure à 1 N.mm pendant 3 à 5 minutes après sa mise en contact avec un liquide chaud à 45°C.

6.  Produit alimentaire hydraté obtenu en réhydratant le produit alimentaire sec des revendications 1 à 3, présentant une masticabilité inférieure à 1 N.mm pendant 3 à 5 minutes après sa mise en contact avec un liquide chaud à 45°C.

7.  Utilisation du produit alimentaire sec tel que défini aux revendications 1 à 3, ou du produit alimentaire hydraté des revendications 4 à 6, dans l'alimentation infantile, de préférence pour l'alimentation des bébés de 12 à 36 mois.

8.  Utilisation du produit alimentaire hydraté de la revendication 4, pour l'alimentation des bébés de 12 à 36 mois.

9.  Utilisation du produit alimentaire hydraté de la revendication 5 pour l'alimentation des bébés à partir de 12 mois.

10. Utilisation du produit alimentaire hydraté de la revendication 6 pour l'alimentation des bébés à partir de 18 mois.

11. Aliment sec pour bébé contenant au moins un produit alimentaire sec tel que défini dans les revendications 1 à 3.

12. Aliment hydraté pour bébé contenant au moins un produit alimentaire hydraté tel que défini dans les revendications 4 à 6.

13. Procédé pour la production d'un produit alimentaire sec ayant une texture croustillante, comprenant les étapes consistant à:

    a. mélanger :

        - 10 à 70 % en poids de flocons ou de poudre comprenant plus de 40 % de fruit et/ou de légume, lesdits flocons ou poudre ayant une teneur en eau d'au plus 5%,
        - 30 à 90 % en poids d'au moins un ingrédient glucidique ayant une teneur en eau d'au plus 15%,

la somme des poids desdits flocons ou de ladite poudre et dudit ingrédient glucidique représentant plus de 90% en poids du poids total du mélange,
b. soumettre ce mélange à une cuisson - extrusion,
c. expansion et formage du produit extrudé,
d. séchage du produit obtenu à l'étape c), dans un compartiment chauffé entre 100 et 140°C, jusqu'à une teneur en eau de 1 à 6 %.
e. refroidissement et conditionnement final.

**14.** Procédé selon la revendication 13, dans lequel le mélange sec avant extrusion a une humidité comprise entre 7 et 12 %.

**15.** Procédé selon l'une quelconque des revendications 13 ou 14, dans lequel ledit produit alimentaire sec est conditionné sous sa forme extrudée.

**Patentansprüche**

**1.** Trockenes extrudiertes Lebensmittelprodukt, aufweisend eine knusprige Textur, enthaltend:

1. zwischen 10 bis 70 Gew.-% dehydriertes Obst und/oder Gemüse und
2. zwischen 30 bis 90 Gew.-% mindestens einer Kohlenhydratzutat,

wobei die Summe der Gewichte des Obsts und/oder Gemüses und der Kohlenhydratzutat über 90 Gew.-% des Gesamtgewichts des trockenen Lebensmittelprodukts darstellt,
**dadurch gekennzeichnet, dass** es einen Elastizitätsindex zwischen 3 und 50 % inklusive darstellt.

**2.** Trockenes extrudiertes Lebensmittelprodukt nach Anspruch 1, wobei das dehydrierte Obst und/oder Gemüse durch Walzentrocknung und/oder durch Trocknen durch Zerstäuben gewonnen sind.

**3.** Trockenes extrudiertes Lebensmittelprodukt nach Anspruch 1 oder 2, wobei das dehydrierte Obst und/oder Gemüse eine durchschnittliche Korngröße über 250 $\mu$m, vorzugsweise über 710 $\mu$m, hat.

**4.** Hydriertes Lebensmittelprodukt, erhalten durch Rehydrieren des trockenen Lebensmittelprodukts der Ansprüche 1 bis 3, aufweisend einen Elastizitätsindex zwischen 30 bis 50 % inklusive eine Minute nach seinem Inkontaktversetzen mit einer 45 °C warmen Flüssigkeit.

**5.** Hydriertes Lebensmittelprodukt, erhalten durch Rehydrieren des trockenen Lebensmittelprodukts der Ansprüche 1 bis 3, aufweisend eine Bissfestigkeit über 1 N·mm während 3 bis 5 Minuten nach seinem Inkontaktversetzen mit einer 45 °C warmen Flüssigkeit.

**6.** Hydriertes Lebensmittelprodukt, erhalten durch Rehydrieren des trockenen Lebensmittelprodukts der Ansprüche 1 bis 3, aufweisend eine Bissfestigkeit unter 1 N·mm während 3 bis 5 Minuten nach seinem Inkontaktversetzen mit einer 45 °C warmen Flüssigkeit.

**7.** Verwendung des trockenen Lebensmittelprodukts nach den Ansprüchen 1 bis 3 oder des hydrierten Lebensmittelprodukts der Ansprüche 4 bis 6 in der Kinderernährung, vorzugsweise zur Ernährung der Babys von 12 bis 36 Monaten.

**8.** Verwendung des hydrierten Lebensmittelprodukts von Anspruch 4 zur Ernährung der Babys von 12 bis 36 Monaten.

**9.** Verwendung des hydrierten Lebensmittelprodukts von Anspruch 5 zur Ernährung der Babys ab 12 Monaten.

**10.** Verwendung des hydrierten Lebensmittelprodukts von Anspruch 6 zur Ernährung der Babys ab 18 Monaten.

**11.** Trockenes Lebensmittel für Baby, enthaltend mindestens ein trockenes Lebensmittelprodukt nach den Ansprüchen 1 bis 3.

**12.** Hydriertes Lebensmittel für Baby, enthaltend mindestens ein hydriertes Lebensmittelprodukt nach den Ansprüchen 4 bis 6.

**13.** Verfahren für die Herstellung eines trockenen Lebensmittelprodukts mit einer knusprigen Textur, umfassend die Schritte, die darin bestehen:

a. Mischen

- 10 bis 70 Gew.-% Flocken oder Pulver, umfassend über 40 % Obst und/oder Gemüse, wobei die Flocken oder das Pulver einen Wassergehalt von höchsten 5 % haben,
- 30 bis 90 Gew.-% mindestens einer Kohlenhydratzutat mit einem Wassergehalt von höchstens 15 %,

wobei die Summe der Gewichte der Flocken oder des Pulvers und der Kohlenhydratzutat über 90 Gew.-% des Gesamtgewichts des Gemischs darstellt,

b. Unterziehen dieses Gemischs eines Garens
- einer Extrusion,
c. Expandieren und Formen des extrudierten
Produkts,
d. Trocknen des in Schritt c) erhaltenen Produkts in einem zwischen 100 und 140 °C erwärmten Fach bis zu einem Wassergehalt von 1 bis 6 %,
e. Abkühlen und Endverpacken.

14. Verfahren nach Anspruch 13, wobei das trockene Gemisch vor Extrusion eine Feuchtigkeit zwischen 7 und 12 % inklusive hat.

15. Verfahren nach einem der Ansprüche 13 oder 14, wobei das trockene Lebensmittelprodukt in seiner extrudierten Form verpackt wird.

**Claims**

1. Extruded dry foodstuff having a crispy texture, containing:

   1. between 10 to 70% by weight of dehydrated fruits and/or vegetables, and
   2. between 30 to 90% by weight of at least one carbohydrate ingredient,

   the sum of the weights of said fruits and/or vegetables and said carbohydrate ingredient representing more than 90% by weight of the total weight of said dry foodstuff, **characterized in that** it has a springiness index of between 3 and 50%.

2. Extruded dry foodstuff according to claim 1, wherein the dehydrated fruits and/or vegetables are obtained by roller drying and/or by spray drying.

3. Extruded dry foodstuff according to claim 1 or 2, wherein said dehydrated fruits and/or vegetables have a mean particle size of greater than 250 $\mu$m, preferably greater than 710 $\mu$m.

4. Hydrated foodstuff obtained by rehydrating the dry foodstuff of claims 1 to 3, having a springiness index of between 30 and 50% one minute after being brought into contact with a hot liquid at 45 °C.

5. Hydrated foodstuff obtained by rehydrating the dry foodstuff of claims 1 to 3, having a chewiness greater than 1 N·mm for 3 to 5 minutes after being brought into contact with a hot liquid at 45 °C.

6. Hydrated foodstuff obtained by rehydrating the dry foodstuff of claims 1 to 3, having a chewiness of less than 1 N·mm for 3 to 5 minutes after being brought into contact with a hot liquid at 45 °C.

7. Use of the dry foodstuff as defined in claims 1 to 3, or of the hydrated foodstuff of claims 4 to 6, in infant food, preferably in food for babies 12 to 36 months of age.

8. Use of the hydrated foodstuff of claim 4, in food for babies 12 to 36 months of age.

9. Use of the hydrated foodstuff of claim 5 in food for babies 12 months of age or older.

10. Use of the hydrated foodstuff of claim 6 in food for babies 18 months of age or older.

11. Dry baby food containing at least one dry foodstuff as defined in claims 1 to 3.

12. Hydrated baby food containing at least one hydrated foodstuff as defined in claims 4 to 6.

13. Method for producing a dry foodstuff having a crispy texture, comprising the steps consisting of:

    a. mixing:

    - 10 to 70% by weight of flakes or powder consisting of more than 40% fruit and/or vegetable, said flakes or powder having a water content of at most 5%,
    - 30 to 90% by weight of at least one carbohydrate ingredient having a water content of at most 15%,

    wherein the sum of the weights of said flakes or said powder and said carbohydrate ingredient represents more than 90% by weight of the total weight of the mixture,
    b. subjecting said mixture to cooking - extrusion,
    c. expanding and shaping the extruded product,
    d. drying the product obtained in step c), in a compartment heated to between 100 and 140 °C, until a water content of 1 to 6% is reached,
    e. cooling and final packaging.

14. Method according to claim 13, wherein the dry mixture before extrusion has a moisture content of between 7 and 12%.

15. Method according to any one of claims 13 or 14, wherein said dry foodstuff is packaged in its extruded form.

Figure 1

Produits
déshydratés

Produits
extrudés

Filières

| Fourreau à 2 vis | Zone de chauffe 1 | Zone de chauffe 2 | Zone de chauffe 3 | Tête d'extru sion | couteau | | Four | condition nement |

Figure 2

Figure 3

Evolution du taux de réhydratation en fonction du temps de trempage dans du lait à 45°C de différents Crispies

Figure 4

Graphique des moyennes de la Dureté 1 en fonction du temps de réhydratation

Dureté 1 (N)

Temps de réhydratation (minutes)

Figure 5

Figure 6

Graphique des moyennes de la masticabilité du produit B en fonction du temps de réhydratation

Masticabilité (N.mm)

Temps de réhydratation (minutes)

Figure 7

**EP 2 871 976 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012117106 A
- GB 2428958 A